## Europäisches Patentamt
## European Patent Office
## Office européen des brevets

(19)

(11) Publication number: **0 008 726**
**B1**

(12) **EUROPEAN PATENT SPECIFICATION**

(45) Date of publication of patent specification: **24.08.83**

(51) Int. Cl.³: **G 02 C 7/04**

(21) Application number: **79103027.3**

(22) Date of filing: **20.08.79**

(54) Contact lenses and methods of making the same.

(30) Priority: **04.09.78 NZ 188325**

(43) Date of publication of application:
**19.03.80 Bulletin 80/6**

(45) Publication of the grant of the patent:
**24.08.83 Bulletin 83/34**

(84) Designated Contracting States:
**CH DE FR GB IT**

(56) References cited:
**FR - A - 2 281 584**
**FR - A - 2 284 893**

(73) Proprietor: **Hirst Contact Lens Limited**
**41-45 Leslie Avenue**
**Mount Albert, Auckland 3 (NZ)**

(72) Inventor: **van der Kolk, Herbert Cornelis**
**c/o Hirst Contact Lens Ltd. 41-45 Leslie Avenue**
**Mount Albert, Auckland 3 (NZ)**
Inventor: **Davy, Martyn William**
**c/o Hirst Contact Lens Ltd. 41-45 Leslie Avenue**
**Mount Albert, Auckland 3 (NZ)**

(74) Representative: **Goddar, Heinz, Dr. et al,**
**FORRESTER & BOEHMERT Widenmayerstrasse 4/I**
**D-8000 München 22 (DE)**

Courier Press, Leamington Spa, England

## Contact lenses and methods of making the same

This invention relates to contact lenses and to methods of making the same.

When fitting toroidal contact lenses, the present practice is to use a trial lens to assist the fit and predict the performance of the lens. Previous toroidal lens designs required the toric surface to be worked across the whole of the exterior surface; thus, when the final lens was produced, it could differ considerably in geometry from the trial lens.

According to the first aspect of the present invention there is provided a method of manufacturing a contact lens having a lenticular anterior surface with a restricted central zone and a surrounding annular carrier, characterised in that a toric part (1) of the lens is formed without prism only over the restricted central zone and independent prism ballast (2) of the lens is formed independently of the toric part over the carrier only of the lenticular anterior surface so that, in use, the centre of gravity (6) of the contact lens is below the centre of rotation thereof.

According to the second aspect of the present invention there is provided a contact lens having a lenticular anterior surface with a restricted central zone and a surrounding annular carrier, characterised in that a toric part (1) is provided without prism over the restricted central zone of the lens and independent prism ballast is provided independent of the toric part over the carrier only of the lenticular anterior surface so that, in use, the centre of gravity (6) of the lens is below the centre of rotation thereof.

The present invention aims to provide a remedy to the aforementioned problem and this is achieved by providing a toricity without prism over a restricted central zone only. Because, in the invention, the toric position is worked only over the restricted central zone of the exterior surface, the similarity of the trial lens to the final lens is considerably increased and thus enables the performance of the final lens to be accurately predicted, ensuring that lenses of widely differing powers are subjectly comfortable. The invention also calls for the carrier to provide prism without toricity and this assists in providing stability to the lens.

The advantages offered by the invention are thus to assist prediction of performance of the trial lens and increase confidence of an optometrist that the lens as ordered will perform in substantially the same way as the trial lens. In addition, a more stable lens is provided; when the lower part of the flange is truncated, a lighter lens results.

One preferred form of the invention will now be described, by way of example, with reference to the accompanying drawing, in which:

FIGURE 1 is a cross sectional elevation of a high minus powered anterior surface toroidal soft lens in the process of being made according to the invention, and

FIGURE 2 is a front elevation of the lens shown in Figure 1.

This invention relates particularly but not exclusively to high minus powered anterior surface toroidal soft lenses as shown in the drawings and using single truncation and prism ballast with substantial reduction of excess weight at the apex of the prism. Such lenses introduce problems relating to stability. The present invention has, therefore, been designed to obviate or minimise such problems and the lens is accordingly manufactured in the following manner.

The invention aims to produce a toric contact lens which has the toric part 1 on the central optic cap and, to provide prism ballast 2 in the annular carrier 3, the following procedure is adopted.

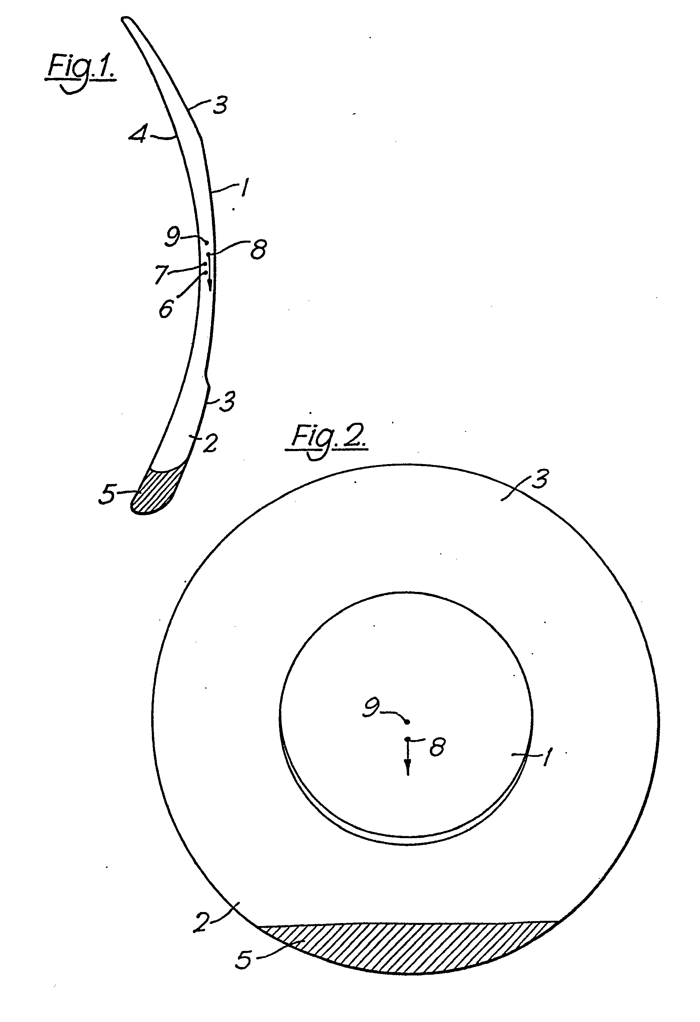

The required convex curve of annular carrier 3 is cut on a contact lens blank in the conventional manner to a predetermined centre thickness. The inner concave surface 4 is also produced and shaped in the known way. The blank is then processed by lathing and polishing the annular carrier portion 3 and the toric part 1 so that the central optic zone is provided with a toric optic portion without prism. The carrier outer portion 3 is obtained by mounting the blank so that it spins eccentrically in a radius turning lathe to produce prism but without toric effect. It will be noted from the drawings that the central toric optic portion 1 is limited to a diameter about half the diameter of the lens as shown in Fig. 1 and in practice this limitation is of the order of $8\frac{1}{2}$ mm.

Following these operations the lower portion 5 of the prism (shown in cross hatching in both Figs. 1 and 2) is removed.

The effect of these operations is as follows:

By applying the power of the lens over the central toric portion 1 only there is a considerable reduction in the size of the lower portion 2 even before truncation. As a result the original centre of gravity is substantially as shown diagrammatically at 6 and the centre of rotation which is substantially the geometric centre of the lens is diagrammatically shown at 7. It will be seen that this would give stability but would result in a heavy lens. To reduce the lens size and to improve the stabilising characteristics of the lens the truncating of the lens by removing the lower portion 5 results in a change in the centre of gravity to the position shown diagrammatically at 8 and change in the centre of rotation to the position shown diagrammatically at 9. As a result there is an upward movement of both the centre of gravity and of the centre of rotation but the centre of gravity 8 remains below the geometric centre i.e. the centre of rotation 9 giving the desired result.

When the lens is worn by a user any rotational movement of the lens from the position in which the centre of gravity 8 is directly below the centre of rotation 9 caused e.g. by lid or eye movement results in a correcting force being created which tends to rotate the lens to the correct orientation rather than continuing the rotation to the inverted position. Thus a more stable and satisfactory result is obtained than has hitherto been possible.

When fitting toroidal lenses the present practice is to use a trial lens to assist the fit and predict the performance of the lens. Previous toroidal lens designs required the toric surface to be worked across the whole of the exterior surface, thus when the final lens was produced it could differ considerably in geometry from the trial lens. Because in the invention the toric position is worked only over a limited area of the exterior surface, the similarity of the trial lens to the final lens is considerably increased and thus enables the performance of the final lens to be accurately predicted, ensuring that lenses of widely differing powers are subjectly comfortable, because of the uniformity of the carrier design.

With appropriate modifications the invention is also applicable to lower powered lenses and to hard contact lenses.

## Claims

1. A method of manufacturing a contact lens having a lenticular anterior surface with a restricted anterior central zone and a surrounding annular carrier, characterised in that a toric part (1) of the lens is formed without prism only over the restricted central zone and independent prism ballast (2) of the lens is formed independently of the toric part over the carrier only of the lenticular anterior surface so that, in use, the centre of gravity of the contact lens is below the centre of rotation thereof.

2. A method as claimed in Claim 1, which includes the step of truncating the annular carrier in a lower area (5) of the lens so that there is upward movement of the centre of gravity (8) and the centre of rotation (9).

3. A method as claimed in Claim 1 or Claim 2, wherein the resulting contact lens is a minus powered anterior surface toroidal soft lens.

4. A method as claimed in Claim 3 wherein the resulting contact lens is high minus powered.

5. A contact lens having a lenticular anterior surface with a restricted anterior central zone and a surrounding annular carrier, characterised in that a toric part (1) is provided without prism over the restricted central zone of the lens and independent prism ballast is provided independent of the toric part over the carrier only of the lenticular anterior surface so that, in use, the centre of gravity (6) of the lens is below the centre of rotation (7) thereof.

6. A contact lens as claimed in Claim 5, wherein the toric part of the contact lens is restricted to a central area of about $8\frac{1}{2}$ mm in diameter.

7. A contact lens as claimed in Claim 5 or Claim 6, wherein the lens is a minus powered anterior surface toroidal soft lens.

8. A contact lens as claimed in Claim 7, wherein the lens is high minus powered.

## Revendications

1. Procédé de fabrication d'une lentille de contact ayant une surface antérieure lenticulaire présentant une zone centrale antérieure limitée, et un support annulaire périphérique, caractérisé en ce qu'une partie torique (1) de la lentille est réalisée sans prisme seulement sur la zone centrale limitée. et qu'un prisme stabilisateur indépendant (2) de la lentille est réalisé indépendamment de la partie torique sur le support seulement de la surface antérieure lenticulaire de sorte que, en utilisation, le centre de gravité de la lentille de contact est situé sous le centre de rotation de cette dernière.

2. Procédé tel que revendiqué dans la revendication 1, caractérisé en ce qu'il comprend l'étape consistant à tronquer le support annulaire dans une zone inférieure (5) de la lentille de sorte qu'il se produit un mouvement vers le haut du centre de gravité (8) et du centre de rotation (9).

3. Procédé tel que revendiqué dans la revendication 1 ou dans la revendication 2, dans lequel la lentille de contact qui en résulte est une lentille molle toroïdale à surface antérieure de puissance négative.

4. Procédé tel que revendiqué dans la revendication 3, dans lequel la lentille de contact qui en résulte est de puissance fortement négative.

5. Lentille de contact ayant une surface antérieure lenticulaire présentant une zone centrale antérieure limitée et un support annulaire périphérique, caractérisée en ce qu'une partie torique (1) est réalisée sans prisme sur la zone centrale limitée de la lentille et qu'un prisme stabilisateur indépendant est réalisé indépendamment de la partie torique sur le support seulement de la surface antérieure lenticulaire de sorte que, en utilisation, le centre de gravité (6) de la lentille est situé sous le centre de rotation (7) de cette dernière.

6. Lentille de contact telle que revendiquée dans la revendication 5, dans laquelle la partie torique de la lentille de contact est limitée à une zone centrale d'environ 8,5 mm de diamètre.

7. Lentille de contact telle que revendiquée dans la revendication 5 ou dans la revendication 6, dans laquelle la lentille est une lentille molle toroïdale à surface antérieure de puissance négative.

8. Lentille de contact telle que revendiquée dans la revendication 7, dans laquelle la lentille est de puissance fortement négative.

**Patentansprüche**

1. Verfahren zum Herstellen einer Kontaktlinse, die ein Linsen-Deckglas mit einem begrenzen Deckglas-Zentralbereich und einem diesen umgebenden ringförmigen Träger besitzt, dadurch gekennzeichnet, daß nur über einen begrenzten Zentralbereich ein torischer Linsenabschnitt (1) ohne Prisma geformt wird; und ein unabhängiger Linsen-Prismen-Ballast (2) unabhängig vom torischen Abschnitt nur aus dem Deckglas der Linse geformt wird, so daß der Schwerpunkt der Kontaktlinse sich beim Gebrauch unterhalb des Drehpunktes befindet.

2. Verfahren wie in Anspruch 1 beansprucht, das den Schritt des Abschneidens des ringförmigen Trägers an einem unteren Abschnitt (5) der Linse einschließt, so daß der Schwerpunkt (8) und der Drehpunkt (9) sich nach oben bewegen.

3. Verfahren wie in Anspruch 1 oder 2 beansprucht, wobei die Kontaktlinse eine toroidische weiche Kontaktlinse mit einem Deckglas mit negativer Brechkraft ist.

4. Verfahren wie in Anspruch 3 beansprucht, wobei die resultierende Kontaktlinse eine hohe negative Brechkraft besitzt.

5. Kontaktlinse, die ein Linsendeckglas mit einem begrenzten Deckglaszentralbereich und einem diesen umgeebenden ringförmigen Träger besitzt, dadurch gekennzeichnet, daß ein torischer Linsenabschnitt (1) ohne Prisma über den bregenzten Zentralbereich vorgesehen ist, und ein unabhängiger Linsen-Prismen-Ballast, unabhängig vom torischen Abschnitt, über dem Träger und nur aus dem Linsendeckglas ausgebildet ist, so daß beim Gebrauch der Schwerpunkt der Linse sich unterhalb des Drehpunktes (7) befindet.

6. Kontaktlinse wie in Anspruch 5 beansprucht, wobei der torische Abschnitt der Kontaktlinse auf eine Mittelfläche von etwa 8,5 mm Durchmesser begrenzt ist.

7. Kontaktlinse wie in Anspruch 5 oder 6 beansprucht, wobei die Linse eine toroidische weiche Kontaktlinse mit einem Deckglas mit negativer Brechkraft ist.

8. Kontaktlinse wie in Anspruch 7 beansprucht, wobei die Linse hohe negative Brechkraft besitzt.

Fig.1.

Fig.2.